# EUROPÄISCHE PATENTSCHRIFT

(11) **EP 1 023 120 B1**
(45) Veröffentlichungstag und Bekanntmachung des Hinweises auf die Patenterteilung: **02.01.2002**
(21) Anmeldenummer: 98961096.9
(22) Anmeldetag: 01.10.1998
(51) Int. Cl.: B01J 8/00, B01J 8/38, C08F 2/34, C08F 6/26, B07B 4/04, B29C 47/10

(54) **VERFAHREN UND VORRICHTUNG ZUM AUSSCHLEUSEN VON KAUTSCHUK AUS DER GASPHASENPOLYMERISATION**
METHOD AND DEVICE FOR EXTRACTING RUBBER FROM GASEOUS PHASE POLYMERIZATION
PROCEDE ET DISPOSITIF POUR TRANSFERER VERS L'EXTERIEUR DU CAOUTCHOUC PROVENANT DE LA POLYMERISATION EN PHASE GAZEUSE

(30) Priorität: 10.10.1997 DE 19744708
(43) Veröffentlichungstag der Anmeldung: 02.08.2000
(73) Patentinhaber: Bayer Aktiengesellschaft, 51368 Leverkusen (DE)
(72) Erfinder: HAENDELER, Friedrich, Mt. Pleasant, SC 29464 (US); HEROLD, Heiko, D-41470 Neuss (DE); MERSMANN, Franz-Josef, D-51427 Bergisch Gladbach (DE); SCHEBESTA, Klaus, D-51371 Leverkusen (DE); SCHNEIDER, Jürgen, D-50668 Köln (DE); SCHWEIGLER, Norbert, D-51373 Leverkusen (DE)
(86) Internationale Anmeldenummer: EP9806231
(87) Internationale Veröffentlichungsnummer: WO9919373

(56) Entgegenhaltungen:
- EP-A- 0 245 043
- EP-A- 0 332 929
- EP-A- 0 735 058
- DE-A- 3 108 093
- GB-A- 2 094 182

## Beschreibung

Die vorliegende Anmeldung betrifft eine Vorrichtung und ein Verfahren zum kontinuierlichen Ausschleusen von vorklassierten Kautschukpartikeln aus einem Gasphasenpolymerisationsreaktor.

Die Polymerisation von Polyolefinen in der Gasphase ist ein seit langem bekanntes Verfahren, das bereits 1968 zum ersten Mal großtechnisch realisiert wurde (Ullmanns Encyklopädie der technischen Chemie, 4. Auflage 1980, Bd. 19, S. 186 ff).

Die eigentliche Polymerisationsreaktion findet bei diesem Verfahren in einem Wirbelbettreaktor statt, der aus einer Reaktions- und einer darüberliegenden Beruhigungszone, in der die Feststoffpartikel weitgehend von der Gasphase getrennt werden, besteht. Die Monomeren, der Katalysator und mögliche Zusatzstoffe wie z.B. Additive oder Füllstoffe werden in die Reaktionszone eingeleitet. Zur Aufrechterhaltung eines Wirbelbetts wird dem Reaktor, von unten, ein Kreisgasstrom zugeführt. Dieser Kreisgasstrom, der im wesentlichen aus den nicht umgesetzten Monomeren besteht, wird am Kopf des Reaktors wieder abgezogen, von Restpartikeln befreit, gekühlt und in den Reaktor zurückgeführt. Das entstehende Polymerisat wird aus der Reaktionszone kontinuierlich oder semi-kontinuierlich abgezogen und weiterbehandelt.

Aus dem Stand der Technik sind mehrere Verfahren zum Ausschleusen von Polymeren aus einem Gasphasenpolymerisationsreaktor bekannt.

So lehrt die US-PS 3 023 203 z.B. das Ausschleusen der Polymerpartikel aus einem Gasphasenpolymerisationsreaktor mit einem Extruder durchzuführen. Der Extruder ist über ein Rohr mit dem unteren Ende des Polymerisationsreaktors verbunden.

Aus der EP-A-0 348 907 ist ein Verfahren zum Ausschleusen von Polymeren aus einem Gasphasenpolymerisationsreaktor mit einem Schraubenextruder bekannt, der entweder direkt oder über einen Vorlagebehälter mit dem Gasphasenreaktor verbunden ist.

Beide Verfahrensweise haben den Nachteil, daß alle Partikel, unabhängig von ihrer Größe, die sich am unteren Ende des Reaktors ansammeln, unklassiert abgezogen werden.

Aus der EP-A-0 728 771 ist ferner ein Verfahren zum Ausschleusen von Polymerpartikeln aus einem Gasphasenreaktor bekannt, bei dem die Partikel semi-kontinuierlich, über zwei getaktete Zellenradschleusen ausgetragen werden. Auch dieses Verfahren hat den Nachteil, daß die Polymerpartikel unklassiert abgezogen werden. Darüber hinaus kommt es bei diesem Verfahren durch den getakteten Abzug der Polymerpartikel zu Druckschwankungen in dem Gasphasenreaktor.

Es stellt sich deshalb die Aufgabe ein Verfahren zur kontinuierlichen Ausschleusung von vorklassierten Polymerpartikeln aus einem Gasphasenpolymerisationsreaktor Verfügung zu stellen, welches die Nachteile des Standes der Technik nicht aufweist. Eine weitere Aufgabe der vorliegenden Erfindung ist die Bereitstellung einer Vorrichtung zum kontinuierlichen Ausschleusung von vorklassierten Polymerpartikeln aus einem Gasphasenpolymerisationsreaktor.

Die Aufgabe wird erfindungsgemäß durch die Bereitstellung eines Verfahren zum kontinuierlichen Austrag von vorklassierten Kautschukpartikeln aus einem Gasphasenpolymerisationsreaktor gelöst, bei dem die Polymerpartikel in einem Sichter klassiert, die Partikel mit einer ausreichenden Größe anschließend in einer bevorzugten Ausführungsform mit einer Schneckenschleuse ausgeschleust und die zu kleinen Partikel in den Gasphasenpolymerisationsreaktor zurückgefördert werden. Hierbei übernimmt die Schnecke eine Druckschleusenfunktion. Gleichzeitig dient die Schnecke zur Entfernung des Porengases aus den ausgeschleusten Partikeln, wobei das entfernte Porengas in die Reaktionszone rezykliert werden kann.

Zur Überprüfung des Bettinhalts werden Steigrohrsichter, die mit einem Teilgasstrom betrieben werden oder jeder andere, dem Fachmann bekannte Gegenstrom-Schwerkraftsichter, der sich für die Klassierung von klebrigen Polymerpartikeln eignet, eingesetzt. In einer bevorzugten Ausführungsform wird ein Zick-Zack-Sichter verwendet. Dieser kann seitlich neben dem Reaktor angeordnet sein und einen quadratischen oder rechteckigen Querschnitt mit einem Seitenverhältnis von maximal 5 zu 1 aufweisen. In einer weiteren Ausführungsform befindet sich der Zick-Zack-Sichter zentral an der tiefsten Stelle eines konischen Reaktorbodens. Er weist dabei einen kreisringförmigen Querschnitt auf.

Die Sichtgasgeschwindigkeit richtet sich nach der Korngröße und der Dichte des auszuschleusenden Polymerpartikels. Vorzugsweise beträgt die Strömungsgeschwindigkeit zwischen 0 und 2 m/s, besonders bevorzugt zwischen 0,4 und 1,5 m/s.

Bei dem erfindungsgemäßen Verfahren wird der Sichter bei einem Druck betrieben, der mindestens dem Druck in dem Gasphasenpolymerisationsreaktor entspricht. Vorzugsweise wird der Sichter jedoch bei 0 bis 30 bar, besonders bevorzugt bei 2 bis 8 bar Überdruck betrieben.

Vorzugsweise wird bei dem erfindungsgemäßen Verfahren als Schneckenschleuse eine ein- oder zweiwellige Schneckenmaschine eingesetzt. Die Schneckenmaschine muß wenigstens über ein sogenanntes Stauelement verfügen, durch das mindestens der Druck erzeugt wird, der auch in dem Sichter herrscht. Schneckenmaschinen sind kommerziell z.B. von der Firma Berstorfferhältlich.

In einer bevorzugten Ausführungsform des erfindungsgemäßen Verfahrens weist die Schneckenmaschine noch wenigstens eine Mischzone, eine Extrusionszone und einen Granulator auf.

Vorzugsweise wird der Kautschuk vor oder in der Mischzone mit Deaktivata und Additiven und/oder einem Treibmittel versetzt. Besonders bevorzugt wird der Kautschuk unmittelbar vor der Mischzone mit Deaktivata und Additiven und/oder einem Treibmittel versetzt. Deaktivata und Additive im Sinne der Erfindung sind z.B. substituierte oder nicht-substituierte Stearinsäuren, Salze der substituierten oder nicht-substituierten Stearinsäuren, substituierte oder nicht-substituierte organische Säuren, Salze der substituierten oder nicht-substituierten organischen Sätiren, Wasser, Alkohole, Trennmittel, Antistatika, Stabilisatoren, Anti-oxidantien, Antiozonantien, Lösungsmittel, Füllstoffe oder Mischungen aus den genannten Stoffen.

Ganz besonders bevorzugt wird als Treibmittel Wasser verwendet. Vorzugsweise wird dem Kautschuk 0 bis 15 %, besonders bevorzugt 4 bis 8 % Wasser beigemischt. Durch das explosionsartige Verdampfen des Wassers am Schneckenaustritt, wird die Oberfläche des Kautschuk vergrößert und damit die Entgasung von Restmonomerem aus den Polymerpartikeln begünstigt. Ferner ist dadurch ein poröses Polymermaterial erhältlich.

Mit dem erfindungsgemäßen Verfahren können in der Gasphase hergestellte Polymerpartikel jeglicher Art, besonders bevorzugt Kautschukpartikel jeglicher Art ausgeschleust werden.

Polymere im Sinne der Erfindung sind z.B. Poly-α-Olefine, Polyisopren, Polystyrol, SBR, IIR, Polyisobuten, Polychloropren, Silikone und Copolymere aus Ethylen und einem oder mehrerer der folgenden Verbindungen: Acrylnitril, Malonsäureester, Vinylacetat, Acryl- und Methacrylsäurester, Vinylacetat, Acryl- und Methacrylsäureester, α-Olefine, Diene und Triene.

Kautschuke im Sinne der Erfindung sind unvernetzte, aber vernetzbare Polymere, die durch die Vernetzung in den gummielastischen Zustand überführt werden können.

Vorzugsweise wird das erfindungsgemäße Verfahren jedoch zur Ausschleusung von EPM, EPDM, SBR, ABS, NBR, Polyisopren und BR aus einer Gasphasenpolymerisation eingesetzt.

Das erfindungsgemäße Verfahren läßt sich besonders gut in einem Zick-Zack-Sichter und in einer Schneckenschleuse durchführen.

Es wird deshalb auch eine Vorrichtung zum kontinuierlichen Ausschleusen von vorklassierten Kautschukpartikeln aus einem Gasphasenpolymerisationsreaktor, bestehend aus einem Zick-Zack-Sichter und einer nachgeschalteten Schneckenschleuse beansprucht.

Das erfindungsgemäße Verfahren hat die Vorteile, daß nur Partikel mit einer bestimmten Größe ausgeschleust werden. Dadurch reduzieren sich die Weiterbehandlungskosten. Ferner wird der Zick-Zack-Sichter nicht durch den Kautschuk verklebt. Dadurch, daß der Sichter unter demselben Druck wie der Gasphasenpoiymerisationsreaktor steht, müssen die Partikel und der Gasstrom, der in den Reaktor zurückgefördert wird, nicht wieder komprimiert werden.

Im folgenden werden die Erfindung und weitere Vorteile anhand der Figuren 1 bis 3 erläutert.

**Fig. 1** zeigt das erfindungsgemäße Verfahren in Verbindung mit einem Gasphasenpolymerisationsreaktor.

**Fig. 2** ist eine perspektivische Ansicht des Zick-Zack-Sichters.

**Fig. 3** zeigt einen Querschnitt des Zick-Zack-Sichters.

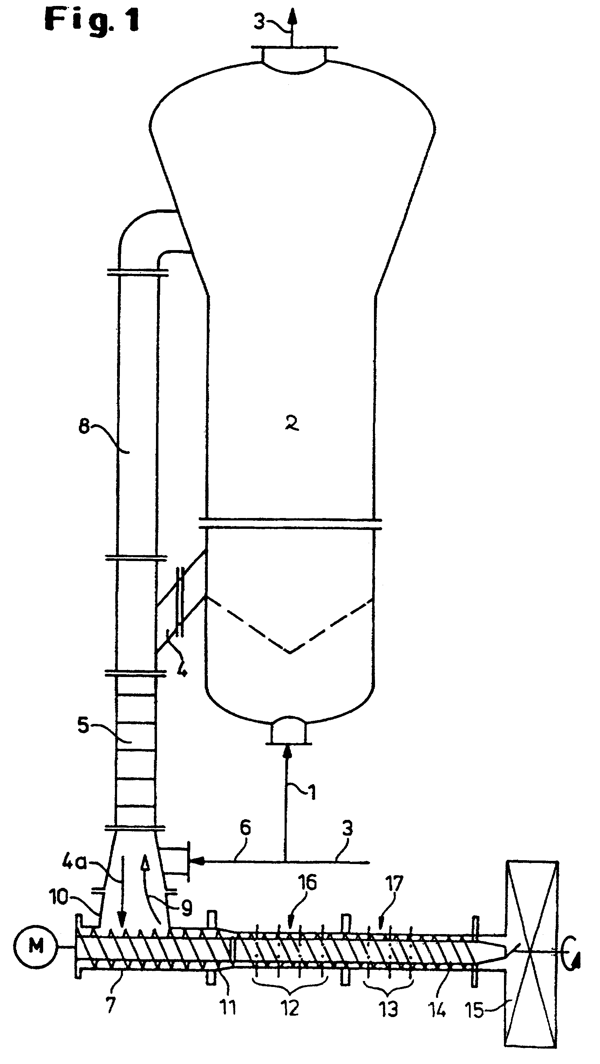

In **Figur 1** ist das erfindungsgemäße Verfahren dargestellt. In dem Gasphasenpolymerisationsreaktor 2 findet die Polymerisation von 1,3-Butadien zu Polybutadien statt. Das 1,3-Butadien wird über den Kreisgasstrom 1 in den Reaktor 2 eingebracht. Dort findet die Polymerisationsreaktion statt und der an 1,3-Butadien abgereicherte Kreisgasstrom 3 wird am Kopf des Reaktors abgezogen, gereinigt, mit neuem 1,3-Butadien angereichert und in den Reaktor recycliert. Die klebrigen Polybutadienpartikel werden mittels der Leitung 4 abgezogen und in den Zick-Zack-Sichter 5 geleitet. Der Zick-Zack-Sichter wird mit einem Teil des Kreisgasstromes 6 betrieben, der von unten in den Sichter eingeleitet wird. In dem Sichter werden die Polymerpartikel klassiert. Diejenigen Partikel 4a, die eine gewisse Größe überschreiten, fallen in den Zulauf der Schneckenmaschine 7. Die anderen Partikel werden mit dem Sichtgas mitgerissen und über die Leitung 8 in den Gasphasenpolymerisationsreaktor 1 recycliert.

In der Schneckenmaschine 7 werden die Polymerpartikel zunächst einmal von dem Lückengas 9 befreit, das über die Leitung 10 abgezogen wird.

Die Schneckenmaschine ist aus einer Einzugszone, einer Stauzone 11, vier Mischebenen 12, zwei weiteren Mischebenen 13 und einem Extrusionszone 14 aufgebaut. An die Schneckenmaschine schließt sich ein Granulator an.

In die Mischzonen 12 wird via Leitung 16 Stearinsäure (16 Gew.-% in Hexan) und kommerziell erhältliche Anti-oxidantien, wie z.B. Vulkanox BKF der Bayer AG zudosiert. Über Leitung 17 wird in die Mischzone 13 Wasser zugegeben. Durch das explosionsartige Verdampfen des Wassers am Schneckenaustritt, wird die Oberfläche des Kautschuk vergrößert und damit die Entgasung von Restmonomerem aus den Polymerpartikeln begünstigt. Ferner ist dadurch ein poröses Polymermaterial erhältlich.

Abschließend wird das Material in dem Granulator auf eine gewünschte Größe zerkleinert.

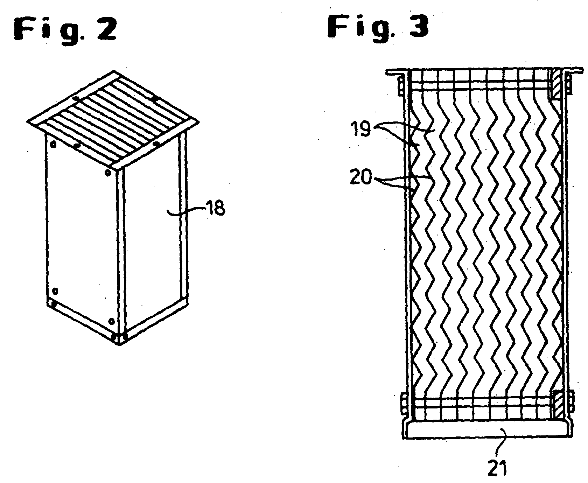

Wie aus den **Figuren 2** und **3** zu entnehmen ist, besteht der Zick-Zack-Sichter 18 aus einer Vielzahl von geraden, rechteckigen Kanälen, die unter einem Winkel von ca. 120° aufeinander stoßen. Die Kanäle 19 werden durch zick-zack-förmig gebogene Riffelbleche 20 begrenzt. Am unteren Ende des Zick-Zack-Sichters ist ein Gasverteiler 21 angeordnet, mit dessen Hilfe allen Sichtkanälen dieselbe Gasmenge zugeführt wird. In jedem Sichterelement, worunter hier die Strecke zwischen zwei benachbarten Sichtstellen zu verstehen ist, bildet sich eine Wirbelwalze aus. Das zu sichtende Gut rutscht auf der jeweils unteren Fläche herab, durchquert den Sichtgasstrom, bewegt sich dann auf der jeweils oberen Fläche aufwärts und durchquert hier erneut den Sichtgasstrom. Bei jedem Durchqueren erfolgt eine Sichtung, so daß insgesamt eine sehr hohe Trennschärfe erzielt wird.

Der Sichter hat einen einstellbaren Querschnitt. Die Festlegung des erforderlichen Mindestquerschnitts muß experimentell erfolgen, weil er von der Kornverteilung des Wirbelbetts in dem Reaktor und dem des auszutragenden Gutes abhängt. Die Verstelleinrichtung besteht aus kammerartig miteinander verbundenen, dem Zick-Zack-Profil angepaßten Stegen, die mittels eines Vortriebs 15 quer, also senkrecht zur Sichterachse, verschiebbar sind.

## Patentansprüche

1. Verfahren zum kontinuierlichen Ausschleusen von vorklassierten Polymerpartikeln, insbesondere Kautschukpartikeln, aus einem Gasphasenpolymerisationsreaktor, **dadurch gekennzeichnet, daß** die Polymerpartikel in einem Sichter klassiert, die Partikel mit einer ausreichenden Größe anschließend ausgeschleust werden und die zu kleinen Partikel in den Gasphasenpolymerisationsreaktor zurückgefördert werden.

2. Verfahren zum kontinuierlichen Ausschleusen von vorklassierten Polymerpartikeln, insbesondere Kautschukpartikeln, aus einem Gäsphasenpolymerisationsreaktor, **dadurch gekennzeichnet, daß** die Polymerpartikel in dem Sichter klassiert, die Partikel mit einer ausreichenden Größe anschließend mit der Schneckenschleuse ausgeschleust und die zu kleinen Partikel in den Gasphasenpolymerisationsreaktor zurückgefördert werden.

3. Verfahren zum kontinuierlichen Ausschleusen von Polymerpartikeln nach Anspruch 2, **dadurch gekennzeichnet, daß** der Sichter ein Zick-Zack-Sichter ist, der vorzugsweise bei demselben Druck wie der Gasphasenpolymerisationsreaktor betrieben wird.

4. Verfahren zum kontinuierlichen Ausschleusen von Polymerpartikeln nach einem der Ansprüche 2 oder 3, **dadurch gekennzeichnet, daß** die Schneckenschleuse eine ein- oder zweiwellige Schneckenmaschine ist.

5. Verfahren zum kontinuierlichen Ausschleusen von Polymerpartikeln nach Anspruch 4, **dadurch gekennzeichnet, daß** die Schneckenmaschine ein Stauelement und vorzugsweise mindestens eine Mischzone, einer Extrusionszone und einen Granulator aufweist.

6. Verfahren zum kontinuierlichen Ausschleusen von Polymerpartikeln nach Anspruch 5, **dadurch gekennzeichnet, daß** vor oder in die Mischzone Additive und/oder Treibmittel und/oder Deaktivata zugegeben werden.

7. Verfahren zum kontinuierlichen Ausschleusen von Polymerpartikeln nach Anspruch 6, **dadurch gekennzeichnet, daß** das Treibmittel Wasser ist.

8. Verfahren zum kontinuierlichen Ausschleusen von Polymerpartikeln nach einem der Ansprüche 1-7, **dadurch gekennzeichnet, daß** die Polymerpartikel EPM, EPDM, Polyisopren, SBR und BR sind.

9. Verfahren zum kontinuierlichen Ausschleusen von Polymerpartikeln nach einem der Ansprüche 1-8, **dadurch gekennzeichnet, daß** die Polymerpartikel in Anwesenheit von Füllstoffen oder Puderungsmitteln, wie Ruß, Silica, Talkum, Ton oder gemahlenen Polyolefinen polymerisiert worden sind.

10. Verfahren zum kontinuierlichen Ausschleusen von Polymerpartikeln nach einem der Ansprüche 1-9, **dadurch gekennzeichnet, daß** die Polymerpartikel bei Reaktortemperaturen unterhalb des Taupunktes eines der eingesetzten Monomere oder Inertgase polymerisiert worden sind.

11. Verfahren zum kontinuierlichen Ausschleusen von Polymerpartikeln nach einem der Ansprüche 1-10 , **dadurch gekennzeichnet, daß** die Polymerpartikel in Anwesenheit von Füllstoffen oder Puderungsmitteln, wie Ruß, Silica, Talkum, Ton oder gemahlenen Polyolefinen polymerisiert worden sind und im erfindungsgemäßen Verfahren abgetrennter Füllstoff oder Puderungsmittel in den Reaktor zurückgeführt wird.

12. Verfahren zum kontinuierlichen Ausschleusen von nicht-klebrigen, vorklassierten Polymerpartikeln aus einem Gasphasenpolymerisationsreaktor, **dadurch gekennzeichnet, daß** die Polymerpartikel in dem Sichter klassiert, die Partikel mit einer ausreichenden Größe anschließend mit der Schneckenschleuse ausgeschleust und die zu kleinen Partikel in den Gasphasenpolymerisationsreaktor zurückgefördert werden.

13. Vorrichtung zum kontinuierlichen Ausschleusen von klebrigen, vorklassierten Polymerpartikeln aus einem Gasphasenpolymerisationsreaktor, bestehend aus einem Zick-Zack-Sichter und einer nachgeschalteten Schneckenschleuse.

## Claims

1. Process for the continuous discharge of pre-classified polymer particles, particularly rubber particles, from a gas phase polymerisation reactor, **characterised in that** the polymer particles are classified in a classifier, the particles with a sufficient size are then discharged and the undersize particles are conveyed back into the gas phase polymerisation reactor.

2. Process for the continuous discharge of pre-classified polymer particles, particularly rubber particles, from a gas phase polymerisation reactor, **characterised in that** the polymer particles are classified in the classifier, the particles with a sufficient size are then discharged with the screw feeder and the undersize particles are conveyed back to the gas phase polymerisation reactor.

3. Process for the continuous discharge of polymer particles according to claim 2, **characterised in that** the classifier is a zigzag classifier which is operated preferably at the same pressure as the gas phase polymerisation reactor.

4. Process for the continuous discharge of polymer particles according to one of claims 2 or 3, **characterised in that** the screw feeder is a single or twin-screw extruder.

5. Process for the continuous discharge of polymer particles according to claim 4, **characterised in that** the screw extruder has a baffle and preferably at least one mixing zone, an extrusion zone and a granulator.

6. Process for the continuous discharge of polymer particles according to claim 5, **characterised in that** additives and/or blowing agents and/or deactivating agents are added before or in the mixing zone.

7. Process for the continuous discharge of polymer particles according to claim 6, **characterised in that** the blowing agent is water.

8. Process for the continuous discharge of polymer particles according to one of claims 1-7, **characterised in that** the polymer particles are EPM, EPDM, polyisoprene, SBR and BR.

9. Process for the continuous discharge of polymer particles according to one of claims 1-8, **characterised in that** the polymer particles have been polymerised in the presence of fillers or extenders such as carbon black, silica, talc, clay or ground polyolefins.

10. Process for the continuous discharge of polymer particles according to one of claims 1-9, **characterised in that** the polymer particles have been polymerised at reactor temperatures below the dew point of one of the monomers or inert gases used.

11. Process for the continuous discharge of polymer particles according to one of claims 1-10, **characterised in that** the polymer particles have been polymerised in the presence of fillers or extenders such as carbon black, silica, talc, clay or ground polyolefins, and filler or extender separated in the process according to the invention is recycled to the reactor.

12. Process for the continuous discharge of non-sticky, pre-classified polymer particles from a gas phase polymerisation reactor, **characterised in that** the polymer particles are classified in the classifier, the particles with a sufficient size are then discharged with the screw feeder and the undersize particles are conveyed back into the gas phase polymerisation reactor.

13. Device for the continuous discharge of sticky, pre-classified polymer particles from a gas phase polymerisation reactor, composed of a zigzag classifier and a downstream screw feeder.

## Revendications

1. Procédé d'extraction en continu de particules de polymère prétriées, en particulier de particules de caoutchouc, d'un réacteur de polymérisation en phase gazeuse, **caractérisé en ce que** les particules de polymère sont triées dans un crible, **en ce que** les particules présentant une taille suffisante sont ensuite extraites et que les particules trop petites sont renvoyées dans le réacteur de polymérisation en phase gazeuse.

2. Procédé d'extraction en continu de particules de polymère prétriées, en particulier de particules de caoutchouc, d'un réacteur de polymérisation en phase gazeuse, **caractérisé en ce que** les particules de polymère sont triées dans un crible, **en ce qu'**ensuite les particules d'une taille suffisante sont extraites par l'écluse à vis et **en ce que** les particules trop petites sont renvoyées dans le réacteur de polymérisation en phase gazeuse.

3. Procédé d'extraction en continu de particules de polymère selon la revendication 2, **caractérisé en ce que** le crible est un crible en zigzag qui travaille de préférence à la même pression que le réacteur de polymérisation en phase gazeuse.

4. Procédé d'extraction en continu de particules de polymère selon l'une des revendications 2 ou 3, **caractérisé en ce que** l'écluse à vis est une machine à vis à un ou deux arbres.

5. Procédé d'extraction en continu de particules de polymère selon la revendication 4, **caractérisé en ce que** la machine à vis présente un élément d'accumulation et de préférence au moins une zone de mélange, une zone d'extrusion et un granuleur.

6. Procédé d'extraction en continu de particules de polymère selon la revendication 5, **caractérisé en ce que** des additifs et/ou un agent de gonflement et/ou des agents de désactivation sont ajoutés avant ou dans la zone de mélange.

7. Procédé d'extraction en continu de particules de polymère selon la revendication 6, **caractérisé en ce que** l'agent de gonflement est l'eau.

8. Procédé d'extraction en continu de particules de polymère selon l'une des revendications 1 à 7, **caractérisé en ce que** les particules de polymère sont en EPM, EPDM, polyisoprène, SBR et BR.

9. Procédé d'extraction en continu de particules de polymère selon l'une des revendications 1 à 8, **caractérisé en ce que** les particules de polymères ont été polymérisées en présence de charges ou d'agents de poudrage, comme de la suie, de la silice, du talc, de l'argile ou des polyoléfines broyées.

10. Procédé d'extraction en continu de particules de polymère selon l'une des revendications 1 à 9, **caractérisé en ce que** les particules de polymère ont été polymérisées à des températures de réacteur situées en dessous du point de rosée de l'un des monomères ou gaz inertes utilisés.

11. Procédé d'extraction en continu de particules de polymère selon l'une des revendications 1 à 10, **caractérisé en ce que** les particules de polymère ont été polymérisées en présence de charge ou d'agent de poudrage, comme la suie, la silice, le talc, l'argile ou des polyoléfines broyées, et dans le procédé selon l'invention, la charge ou l'agent de formation de poudre séparés sont renvoyés dans le réacteur.

12. Procédé d'extraction en continu de particules de polymère non collantes, prétriées, d'un réacteur de polymérisation en phase gazeuse, **caractérisé en ce que** les particules de polymère sont triées dans un crible, les particules d'une taille suffisante étant ensuite extraites à l'aide de l'écluse à vis et les particules trop petites sont renvoyées dans le réacteur de polymérisation en phase gazeuse.

13. Dispositif d'extraction en continu de particules de polymère collantes prétriées d'un réacteur de polymérisation en phase gazeuse, constitué d'un crible en zigzag et d'une écluse à vis raccordée en aval.
